# EUROPEAN PATENT APPLICATION

(11) **EP 3 567 131 A1**
(43) Date of publication of application: **13.11.2019**
(21) Application number: 19160779.5
(22) Date of filing: 05.03.2019
(51) Int. Cl.: C23C 18/12, C01B 13/32, C04B 38/00, C09D 11/36

(54) **DIRECT DEPOSITION OF MESOPOROUS METAL OXIDE THIN FILMS FOR GAS SENSING**

(30) Priority: 10.05.2018 SG 10201803957
(71) Applicant: Robert Bosch GmbH, 70442 Stuttgart (DE)
(72) Inventor: Daves, Walter, 70469 Stuttgart-Feuerbach (DE); Palale, Suresh, 820648 Singapure (SG); Ersoez, Bora, 85107 Baar-Ebenhausen (DE)

(57) **Abstract**

The present disclosure provides for a deposition method for porous metal oxides in ink-jet printing, the method comprising dissolving a metal component and a templating agent in a non-aqueous solvent to form a precursor solution, ink-jet printing this precursor solution, increasing the relative humidity until at least parts of the non-aqueous solvent are evaporated and replaced with water, thereby triggering an evaporation-induced self-assembly (EISA) of the templating agent in combination with inducing condensation of the metal component, followed by increasing the temperature to at least 200 °C in order to remove the templating agent and to obtain the porous metal oxide after cooling to room temperature. It also provides for a precursor solution for ink-jet printing comprising a metal component and a templating agent in a non-aqueous solvent, wherein the precursor solution is exposed to ink-jet printing followed by a combination of evaporation-induced self-assembly (EISA) of the templating agent in combination with condensation of the metal component. It also provides a gas sensor obtained by depositing the precursor solution as defined above on an inter-digitated electrode (IDE) according to the method as defined above.

## Description

### Technical Field

The disclosure relates to the deposition of metal oxides on a gas sensor, forming a porous metal oxide thereon for detecting gases in the ambient air.

### Background

CO₂, as an example for gases in the ambient air, is used as a measure for indoor air quality. High values can cause dizziness and headaches, which occur beside a lowered concentration capability. Therefore monitoring of CO₂ is emerging as a promising technology for smart control of HVAC systems and e.g. on-demand ventilation.

Among several techniques for CO₂ sensing, most commonly used are optical (NDIR), gravimetric (QCM), acoustic (SAW) and electrochemical techniques.

Miniaturized electrochemical devices consist of a transducer, which is very often an inter-digitated electrode (IDE) structure, and a sensing material. So far, many different material classes were reported to be sensitive to CO₂: metal oxides (BaSnO₃, TiO₂, CuO-SnO₂, BaTiO₃-CuO, SnO₂-WO₃, CdO, La₁₋ₓSrₓFeO₃, SnO₂-La₂O₃, ZnO:Ca), C-nanostructures, organic polymers (BPEI-PEDOT, PEI, PPy, PANI), small molecules, such as amidine, or (poly)ionic liquids.

Compared to typical thin films, significant improvement of performances were achieved by using mesoporous (2-50 nm) metal oxides, which comprise a high surface area, crystalline frameworks, and connected uniform pores.

Mesoporous metal oxides were previously applied for catalysis in order to increase the conversion rate, selectivity and yield of products, e.g. 1,3-butadiene. Mesoporous rare-earth oxides from a template sol-gel route were used for NOₓ sensing based on bulk acoustic wave (BAW).

CO₂ sensors based on mesoporous material, containing metal oxides (MOXs), such as titanium and zirconium, are reported. However, in the previously reported sensors, Nafion (a sulfonated tetrafluoroethylene based fluoropolymer-copolymer) was used as a binder; and therefore resembled a thick film screen printing, utilizing a functional component, binder, vehicle, and modifiers. This results in a powder being printed, not a solution. In another method, mesoporous (nickel. platinum)-yttria-zirconia material was used as electrode materials in solid oxide fuel cells (SOFCs). These were synthesized by aqueous co-assembly of metal complexes with a surfactant template. A mesoscopically structured material was obtained by co-assembly of amphiphilic block-copolymer with inorganic metal compound.

There are various problems associated with the methods known so far. In particular, miniaturization imposes further requirements for material and film deposition time, which makes an efficient deposition method necessary.

In one known method, wafer-level wet-chemical deposition is used to deposit dots on a regular pattern (e.g. 600x900 um). However, in this method, it is crucial to avoid coating of the contact pads in order to prevent electrical short cuts and to keep material waste low.

Another known method is dip- or spin-coating, which is used in the majority of literature reports. However, in this method the contact pads have to be protected by another layer which has to be stripped off after coating. This in turn causes additional processing steps and contamination. Screen printing is another known method. However, in this method, a pressure on the membrane is applied, which may result in breaking the fragile membrane.

Inkjet printing (IJP) is another known method, which meets most requirements for fast and material-efficient deposition. The use of IJP for deposition requires a specific ink preparation, which involves the ink to have a certain viscosity, surface tension, density and pH-value. Additionally, non-volatile solvents are required to prevent clogging of nozzles and to prolong shelf-time of ink. Polar organic solvents with a high boiling point are most likely to meet these requirements. The building blocks for the gas sensing film may be pre-formed nanoparticles or molecular species, which are provided either as dispersion or solutions.

There are several disadvantages associated with pre-synthesized MOX nanoparticles (NPs) in IJP ink. Firstly, pre-synthesis is time- consuming and requires additional steps, and equipment. Further, it is difficult to control the size and the shape and it has been found that monodisperse, spherical NPs would be more favourable. However, it remains very difficult to maintain the quality of nanoparticles, and a batch-to-batch variation is usually observed. Stabilization of the NPs is crucial in order to prevent agglomeration and maintain long shelf time; however, methods of stabilization themselves may lead to irreversible agglomeration if particles are not coated in-situ during the synthesis. This would result in low yield of synthesis because only NPs smaller than the critical size, which is determined by the printhead, can be used.

Hence, ink-jet printing of NPs requires a lot of effort to be optimized in order to prevent the so-called 'coffee stain effect'. Not any co-solvent, having a lower volatility and a lower surface tension, can be used due to possible aggregation or precipitation of NPs upon interaction with co-solvent.

A surface pre-treatment of IDEs with monolayer is not feasible; hence an O₂-plasma treatment is the standard pre-treatment procedure.

Furthermore, use of organic solvents creates non-hydrolytic conditions, which is non-desirable for a sol-gel process involving a precursor without capability for undergoing polycondensation, as for example metal chlorides, metal nitrates, metal acetates etc. Hydrolysis is thus essential for introducing the capability of polycondensation to the metal species. A further concern is a possible collapse of the inorganic framework upon calcination.

In literature reports and patents, a common method is to pre-age inks before deposition, i.e. the gel which possesses much higher viscosity than the initial colloidal solution, is deposited. Once the gel starts forming, i.e. (poly-) condensation is triggered, the viscosity increases with time. However, this method imparts issues for IJP process, which needs a stable ink with nearly constant properties in a narrow range of values.

All of the above mentioned problems require a proper choice of a soft template, with an adequate ratio of template/precursor and adequate processing parameters (calcination temperature/time, hydrolysis and condensation duration).

There is therefore a need to provide a deposition method for ink-jet printing of porous metal oxides, which overcomes, or at least ameliorates, the shortcomings listed above.

### Summary

In a first aspect, there is provided a deposition method for porous metal oxides in ink-jet printing, the method comprising dissolving a metal component and a templating agent in a non-aqueous solvent to form a precursor solution. After ink-jet printing of the precursor solution, the relative humidity of the ambient air is increased. This results in at least parts of the non-aqueous solvent being evaporated and replaced with water, thereby triggering an evaporation-induced self-assembly (EISA) of the templating agent. Meanwhile, through replacing the non-aqueous solvent with water, condensation of the metal component is induced. After the step of increasing the humidity, the temperature is increased to at least 200 °C in order to remove the templating agent and to obtain the porous metal oxide after cooling to room temperature.

The presented process is substantially a one-pot process for the deposition of porous metal oxides, without need for purification and/or stabilization, as there is no sedimentation of nanoparticle (NP) aggregates. The precursor solution may consist of precursors which cannot undergo condensation (or alcohol elimination) under non-hydrolytic conditions. Thus, the sol-to-gel transition may not occur before exposure to high humidity during the aging step (swelling/hydrolysis) of the as-deposited films. Hence, the kinetics of hydrolysis/condensation may be controlled by adjusting the relative humidity (RH) and temperature during this aging step. Due to non-hydrolytic conditions of the initial ink, the shelf-time of the ink is >6months, which may increase the reproducibility during using the devices because one large batch of ink can be used over an extended period of time.

In a second aspect, there is provided a precursor solution for ink-jet printing comprising a metal component and a templating agent in a non-aqueous solvent, wherein the precursor solution is exposed to ink-jet printing followed by a combination of evaporation-induced self-assembly (EISA) of the templating agent in combination with condensation of the metal component.

In a third aspect, there is provided a gas sensor obtained by depositing the precursor solution as described above on an inter-digitated electrode (IDE) according to the method as described above.

### Brief Description of the Drawings

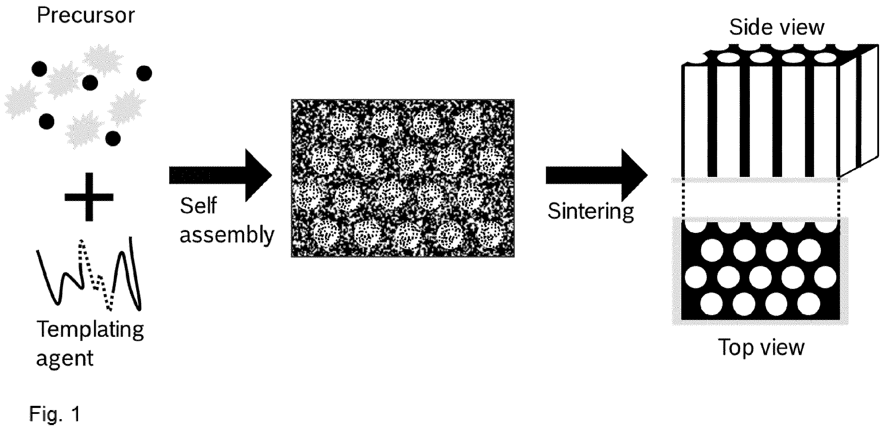

Fig. 1 shows schematically the process of the templated so-gel process as applied in this work. It involves, in a first step (a) dissolving the metal precursors 2 and soft template (surfactant 4 and/or macromolecule 6) in a non-aqueous solvent (for example DMF), ink-jet printing of the ensuing mixture, followed by solvent-vapour annealing, which involves self-assembly 8. During self-assembly and solvent-annealing, the non-aqueous solvent is replaced by H₂O in a dialysis process with subsequent hydrolysis of the metal precursor (b). This induces (poly)condensation of the metal component at elevated temperatures. In a final calcination step (10 and (c)), crystallization of inorganic framework and removal of the template results in the (meso)porous film.
Fig. 2 shows an MEMS structure coated with SnO₂ according to Example 2.
Fig. 3 shows the resistance of the device produced according to Example 2 upon purging 50 and 200 ppb NO₂ with air as carrier gas; the bias applied to the IDE is 1.0V and to the microheater is 0.2V; relative responses are about 250% and 4300% to 50 and 200 ppb, respectively.
Fig. 4 shows an MEMS structure coated with In₂O₃ according to Example 3.
Fig. 5 shows the resistance of the device according to Example 3 upon purging 50 and 200 ppb NO₂ with air as carrier gas; the bias applied to the IDE is 1.0V and to the microheater is 0.6V; relative responses are about 300% and 1600% to 50 and 200 ppb, respectively.
Fig. 6 shows an MEMS structure coated with La₂O₃/La₂O₂CO₃ according to Example 4.
Fig. 7 shows the resistance of the device according to Example 4 upon purging 400 and 4000 ppm CO₂ with air as carrier gas; the bias applied to the IDE is 1.0V and to the microheater is 1.4V; relative responses are about 75% and 265% to 400 and 4000 ppm, respectively.

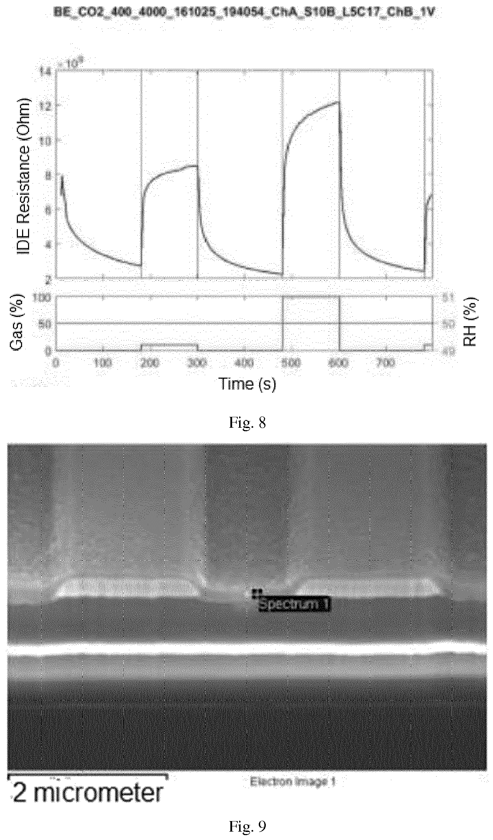

Fig. 8 shows the resistance of the device according to Example 5 upon purging 400 and 4000 ppm CO₂ with air as carrier gas; the bias applied to the IDE is 1.0V and to the microheater is 1.0V; relative responses are about 280% and 440% to 400 and 4000 ppm.
Fig. 9 shows the SEM picture of the device according to Example 5 and in particular the region between two fingers of the IDE, which is coated with SnO₂ and subsequently with some La-containing layer. At closer look, both materials can be distinguished due to the different grey tones. The SnO₂ phase looks brighter which is in accordance with its higher conductivity, thus less charging.

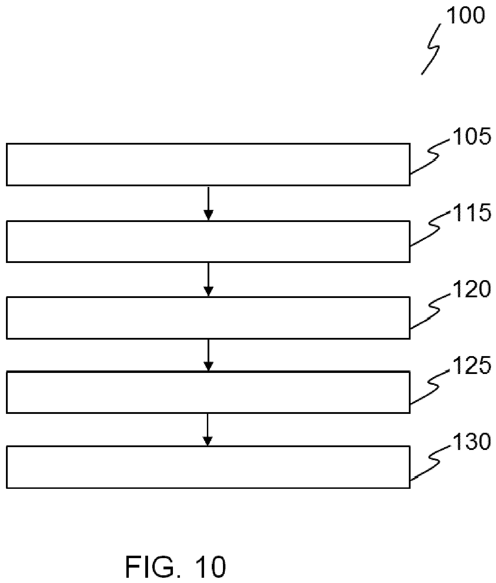

Fig. 10 is a process flow chart describing the individual process steps of the method 100, defined as follows: In step 105, a metal component and a templating agent is dissolved in a non-aqueous solvent to form a precursor solution. In step 110, the precursor solution is ink-jet printed, after which, in step 115, the relative humidity is increased until at least parts of the non-aqueous solvent are evaporated and replaced with water. In step 120, an evaporation-induced self-assembly of the templating agent is triggered in combination with inducing condensation of the metal component. In step 125, the temperature is increased to at least 200 °C in order to remove the templating agent. In step 130, the porous metal oxide is obtained after cooling to room temperature.

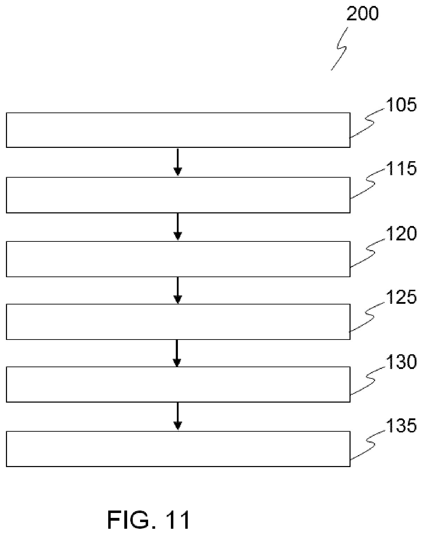

Fig. 11 is a process flow chart describing the individual process steps of the method 200, defined as including the steps 105 to 130 of method 100, and comprising an optional step 135, wherein the porous metal oxide is further functionalized by impregnating the obtained porous metal oxide with a solution comprising a metal component and increasing the temperature to at least 300 °C.

### Detailed Description

The above mentioned problems of agglomeration of particles, which may result in the negative effect of precipitation before use or the 'coffee stain effect', can be solved by the deposition method disclosed herein. Hence, the disclosed precursor solution can be ink-jet printed as a solution, solidifying after being printed, which increases shelf-life of the precursor and sensitivity of the gas sensor by combining EISA with a sol-gel process.

Accordingly, in one aspect, there is provided a deposition method (100) for porous metal oxides in ink-jet printing, the method comprising dissolving a metal component and a templating agent in a non-aqueous solvent to form a precursor solution (105), ink jet printing this precursor solution (110), increasing the relative humidity until at least parts of the non-aqueous solvent are evaporated and replaced with water (115), thereby triggering an evaporation-induced self-assembly (EISA) of the templating agent in combination with inducing condensation of the metal component (120), followed by increasing the temperature to at least 200 °C in order to remove the templating agent (125) and to obtain the porous metal oxide after cooling to room temperature (130).

During the EISA, the templating agent forms a porous network, which may be a free-standing 3D network. The term '3D network' is to be interpreted broadly to include a substantially stable framework which is porous and may be a template. The porous network may be classified by the size of the pores. They can be classified either as micro- and meso-porous or macro-porous. The porous nature of the template may serve the function of being a "negative" in the deposition process for the metal oxide. Hence, any material may be used, as long as it undergoes the EISA process and is removable by a heat treatment. The 3D network according to the invention may comprise or substantially consist of a macromolecule or a macromolecule microsphere. Additionally or alternatively, the template according to the invention may contain a surfactant. The metal oxide may condensate (or grow) on the pore walls of the template. The template may therefore be infiltrated by the metal oxide, resulting in a porous metal oxide. Thereby, the metal oxide may adapt the morphology of the template.

The template may be a 'sacrificial' template, i.e. it may be removed after the metal oxide formed in order to release the porous metal oxide in a heat treatment. The heating treatment may therefore essentially be calcination. This calcination treatment converts the precipitated metal precursor into the crystalline MOX structure.

During the process, the porosity of the template can be adjusted. As the metal oxide adopts the morphology of the template, adjusting the porosity may lead to higher sensitivity of the metal oxide for the detection of gases by tuning the dimension of the MOX. This may result in a lower conductivity of the metal oxide, but a higher sensitivity with a smaller diameter in the material. Hence, this process represents an in situ formation of a thin film of composite material with tunable porosity, for example on a microhotplate micro-electro-mechanical system (MEMS) IDE by a sol-gel process. As a wider range of solvents can be applied to the precursors than for nanoparticles, the present method may allow higher concentrations and better control of so-called 'coffee stain effect'. A proper choice of templating agent and process parameters in the EISA process can be applied in order to tune the porosity of the ensuing film.

The metal component may be a metal salt or a metal nanoparticle. The metal component may be any metal source from which the final metal oxide may be obtained. Hence, any source of metal ions may be used, provided it can form a metal oxide by (post-) processing. In the event the metal component is a metal salt, it may be provided as an organometallic precursor, for example as an acetate, citrate, acetylacetonate, alkoxide, and a combination thereof. Alternatively, it may be provided as an inorganic precursor, for example as an oxide, nitrate, sulphide, phosphate, halogenide (especially chloride), and a combination thereof. If a metal salt is used, this salt may be provided as a hydrate. An advantage of using sol-gel process compared to deposition of nanoparticle inks is the minimization of the coffee stain effect as the solvent can be optimized more freely than in the presence of nanoparticles, which tend to precipitate. The ink-jet process may have a higher stability and/or reproducibility. The precursors for the sol-gel process are readily available and less toxic. The method presented is environmentally friendlier (green chemistry approach), as water and/or alcohol may be used as solvents and the temperature during processing is kept low.

The metal of the metal component may be a transition metal or a metalloid. The term 'transition metal' is to be interpreted broadly to include any element in which the filling of the outermost shell to eight electrons within a periodic table is interrupted to bring the penultimate shell from 8 to 18 or 32 electrons. Transition elements may include, without limitation, scandium, titanium, vanadium, chromium, manganese, iron, cobalt, nickel, copper, zinc, ytterbium, zirconium, niobium, molybdenum, silver, lanthanum, hafnium, tantalum, tungsten, rhenium, rare-earth elements, cerium, praseodymium, neodymium, promethium, samarium, europium, gadolinium, terbium, dysprosium, holmium, erbium, thulium, yttrium, lutetium, and rhodium. Included in this definition are post-transition metals, which may refer to the metallic elements in the periodic table located between the transition metals (to their left) and the metalloids (to their right). These elements may include gallium, indium, thallium, tin, lead, bismuth, cadmium, mercury and aluminum. Alternatively, the metal may be a metalloid. The commonly recognized metalloids are boron, silicon, germanium, arsenic, antimony, tellurium, selenium and polonium and the term 'metalloid' shall encompass these elements accordingly. In one embodiment, tin salts, such as tin halides (particularly chlorides) have been used as the metal component. In another embodiment, indium salts, such as indium nitrates, have been used as the metal component. In another embodiment, lanthanum salts, such as lanthanum oxides with lanthanum oxide/carbonates, have been used as the metal component.

The precursor solution can also include a metal phase as modifier, such as Pd, Pt, Au, Ag. In this case, the sensing mechanism with noble metals will most likely be based on their catalytic activity (spill-over effect) and to less extent to a Schottky effect at the interface MOX/metal. The number of components in the obtained product is not limited. For example, the obtained material may consist of several ceramic phases or ceramic + metal, etc.

The templating agent may be a soft templating agent selected from a macromolecule, a surfactant and a combination thereof. In the event the soft templating agent is chosen from a macromolecule, this may be provided as microparticles, in particular as microspheres. During the EISA process, the microparticles self-assemble and depending on their nature and the process parameters, result in a porous 3D network. Hence, (meso)porosity of the base layer is achieved by using soft-templating agents, such as PMMA microspheres, CTAB, SDBS, TWEEN®, PLURONIC®, PEO-PB-PEO, PVDF-TrFE-CTFE. Hard templates as often utilized in literature reports are avoided due to harsh conditions during their removal for the creation of free-standing porous MOX, which could deteriorate the MEMS.

The EISA and the sol-gel process may also be described as the solvent-annealing step. In this processing step, the relative humidity is increased by at least 50% in order to replace at least parts of the non-aqueous solvent with water and to trigger the EISA of the templating agent in combination with inducing condensation of the metal component. For example, through adjusting a high relative humidity (RH), the organic solvent is slowly replaced by H₂O in a kind of dialysis process, which in turn triggers the hydrolysis of the precursor. The increase in relative humidity may be up to above 60%, 70%, 80% or 90%, or to at least 95%. The time period of the increased relative humidity may be at least 5 h, or at least 10 h, or at least 15 h, preferably about 15 h. Before the sintering step, the solvent annealing step may be followed or accompanied by slightly increased temperature, such as increasing the temperature to above 30 °C, or to between 30 and 60 °C, or to about 40 °C. After increasing the relative humidity, the humidity may be reduced again to ambient humidity. After the higher humidity, the temperature may be held at the slightly increased temperature for at least half an hour, or about/ at least one hour at the ambient humidity, before being step-wise increased to at least 60 °C, or to between 60 °C and 250 °C. The respective steps at the increased temperature may be three steps, wherein in each step the temperature is increased. For example, if the temperature during the increased humidity step is 40 °C, in a first solvent-annealing step under ambient humidity, the temperature may be at least 40 °C and may be held for an hour, in a second solvent-annealing step under ambient humidity the temperature may be increased to 80 °C and held for about one hour, and in a third solvent-annealing step under ambient humidity the temperature may be increased to 120 °C and held for about one hour. The maximum temperature in the solvent-annealing step may be 240 °C.

The non-aqueous solvent used in the precursor solution may be a polar aprotic solvent. The polar aprotic solvent may be selected from the group consisting of tetrahydrofuran, ethyl acetate, acetone, dimethylformamide (DMF), acetonitrile, dimethyl sulfoxide, nitromethane or propylene carbonate, and a combination thereof. In one embodiment, the solvent may be nontoxic and environmentally friendly. In one example, the solvent may be DMF. One or more acid may be added to the precursor mixture in order to initiate hydrolysis.

The process step for obtaining the porous metal oxide may be an additional heating treatment. This heat treatment may therefore essentially be calcination, wherein the temperature is increased to about 300 °C - 600 °C in order to remove the templating agent. In one embodiment, the temperature may be increased to about 400 - 550 °C, or to about 450 - 500 °C. In one example, the temperature in the heating step may be at about 480 °C.

The heating up may proceed gradually. For example, the temperature may be increased at a rate of from about 0.1 °C/min to about 20 °C/min, from about 0.5 °C/min to about 10 °C/min, from about 1.0 °C/min to about 5 °C/min, from about 1.0 °C/min to about 3.0 °C/min, from about 1.0 °C/min to about 2.0 °C/min, or about 1.5 °C/min. The temperature may be held at the maximum temperature in this step for about half an hour up to about 4 h, or about half an hour up to about 2 h. In one example, the temperature was held at this temperature for about one hour.

The at least one metal oxide obtained by the method described above may be a binary or ternary ionic compound, wherein at least one element is a metal and one other element is oxygen. The obtained metal oxide may comprise a metal and an oxide. The metal oxide may be selected from a mixture between two or more types of metal oxides, for example La₂O₃-SnO₂. Preferably, the metal oxide may be selected from La₂O₃-SnO₂, WO₃, In₂O₃, TiO₂, ZnO, SnO₂, BaTiO₃, BaSnO₃, or a mixture thereof.

The obtained porous metal oxide may have an approximate thickness in the range of between 100 to 1000 nm, or between 100 to 800 nm, or between 100 to 500 nm, or between 200 to 400 nm, or between 200 to 300 nm, or between 220 to 280 nm, or approximately 250 nm.

The deposition method may further comprise a functionalization of the obtained porous metal oxide by impregnating the obtained porous metal oxide with a solution comprising a metal component and increasing the temperature to at least 300 °C (135). Such an additional functionalization is, for example, illustrated in Example 5. The functionalization may allow for a stronger sensitization in, for example, the CO₂-sensing. In the additional functionalization step, the impregnating solution may comprise an additional metal component, which may be in a polar, protic solvent, such as acids, alcohols, nitromethane, water, and a combination thereof. In one embodiment, lanthanum salts, such as lanthanum acetates, have been used as the metal component. As an alcohol, methanol, ethanol or ethylene glycol may be used in particular. The sensitizing treatment may be carried out on a porous metal oxide, such as on a tin oxide.

In a second aspect, there is provided a precursor solution for ink-jet printing comprising a metal component and a templating agent in a non-aqueous solvent, wherein the precursor solution is exposed to ink-jet printing followed by a combination of evaporation-induced self-assembly (EISA) of the templating agent in combination with condensation of the metal component. The precursor solution may be as defined further above. The EISA process and the sol-gel process may be initiated as described above. The precursor solution may contain more than one type of precursor in order to obtain mixed metal oxide phases.

In a third aspect, there may be provided a gas sensor obtained by depositing the precursor solution as described above on an inter-digitated electrode (IDE) according to the method as described above. The ensuing gas sensing device may operate as chemiresistor on an interdigitated electrode (IDE).

The gas sensor may be optimized by varying the porosity of the template, i.e. the porous soft template. This may be achieved during the process by using different solvents and different conditions during solvent-annealing, i.e. temperature and humidity, gases or vacuum. One other design variation may consist of changing channel length/width, electrode height and number of fingers of the IDE.

In one embodiment, the gas sensor may be placed on a microhotplate. Hence, the heater may be based on a microhotplate MEMS structure. Alternatively, ceramic heaters may be used to heat the device during operation or regeneration. The sensor can be operated either isothermally at various temperatures or in pulsed mode, where the heater is only turned on periodically.

This disclosure may be regarded as a standard processing methodology for a plethora of materials for gas sensing purpose. This is because by minor optimization of process parameters (EISA time depends on rate of hydrolyzing of particular precursor; sintering temperature depends on desired compound), the process can be transferred to any MOX precursor which can be dissolved in a solvent similar to the ones applied for this work. The disclosure is not necessarily limited to ink-jet printing of solutions. In an alternative, deposition of ink-jet printable metal-organic compounds may be possible.

The proposed method for in-situ preparation of gas sensing materials is meant to be applied by solution based wet-chemical thin-film preparation techniques. The sol-gel synthesis used in conjunction with the self-assembly process provides the advantages of homogeneous mixture of precursor solution, wide range of possible precursors, yielding smooth and homogeneous films in a wide range of thicknesses.

The proposed solution is based on a MEMS transducer platform, allowing low cost and low space requirement, thus meeting the requirements for e.g. consumer electronics (CE) and internet of things (IoT) applications. In order to prove the capability for mass production, it was shown that the components of the composite material applied for the gas sensor can be deposited by ink-jet printing. All materials and devices used for the production of these devices are commercially available.

It is well known that higher porosity leads to increased sensitivity and lower operating temperature, thus the requirements for the Application-specific integrated circuit (ASIC) are less demanding due to moderate operating temperature and low IDE bias. Additional components of the precursor solution can result in higher selectivity, optimized baseline resistance or both.

By using only thermodynamically stable metal oxide phases in the gas sensor, no limitation of the device lifetime is expected compared to electrochemical devices based on organic materials. Instead of using a sol-gel ink, the MOX layer can be obtained in similar fashion for nanoparticles by depositing directly on the MEMS and conduct a templated assembly. In another embodiment, the transducer layout can be varied. In another alternative, the precursor solution is deposited by dropcasting, screen-printing or gravure printing, dip-coating and similar thin-film deposition techniques. In another alternative, the organic solvent may be exchanged, completely or partially, by an aqueous solvent mixture, which will affect the hydrolysis and condensation behavior.

The obtained product does not necessarily have to consist solely of metal oxide phases; other ceramics such as nitrides and carbides can be used as at least one of the components. The obtained product described herein may at least possess one ceramic component.

The obtained product may comprise or consist of segregated phases in order to obtain a synergistic effect upon combining all components; the annealing temperature may be kept as low as possible in order to prevent the sintering of the different phases.

The components may be deposited in the sequence of decreasing annealing temperature in order to prevent undesired modification to the morphology and stoichiometry of previous phases.

Solid solutions are not desired in order to improve the sensor response; however they can be beneficial for tuning the baseline resistance and the long-term stability by preventing grain growth due to impeded mobility of the primary oxide.

Improvement of long-term stability can be achieved by an additional component which can inhibit grain growth of the original primary oxide. This component may not affect electrical and chemical properties too much.

### Examples

### Example 1 - Device Fabrication

Different approaches to obtain mesoporous primary MOX are applied in this work. The one-pot method may be carried out with a precursor salt or with nanoparticles. In both cases, simultaneous ink-jet printing of precursor salt or nanoparticles and structure-directing (templating) agent is carried out.

In all cases the self-assembly of the soft template into a free-standing 3D network takes place upon evaporation of the solvent, according to the principles of the EISA process. Co-assembly is promoted by evaporation of solvent. Polycondensation of inorganic network occurs on the pore walls of polymer. At elevated temperature, decomposition of polymer and further condensation as well as crystallization of the inorganic network occurs. Finally, the crystallized inorganic network should have replicated the morphology of the template. Tuning of the film morphology and/or porosity is achieved by using different templating agents, mixture of solvents, conditions during self-assembly like temperature, humidity, etc.

Functionalization of the aforementioned MOX films by additional phases can be achieved by impregnation of such with a solution of the respective precursor. There is no need to add a templating agent, there should be enough time for the capillary force to suck the solvent up and for the precursor ions to diffuse into the porous structure before the solvent evaporates. For the functionalization, use of a solvent with low volatility, such as ethylene glycol (EG) is advantageous, in order to provide enough time for the additional phase to diffuse into pores.

In the following, the results of the templated sol-gel synthesis route for La-/Sn-/In-compounds are shown; all materials were deposited on the same reticle and processed under the same conditions, despite the fact that each material needs slightly different processing conditions in order to optimize its resulting phase; however obtaining good results although the parameters are not optimized, proves the general applicability of the disclosed method to different metal oxide compounds.

### Example 2 - Sn-compound by templated sol-gel process

Example 2 shows the preparation of a VOC (volatile organic compounds)/NO₂ sensor. In an initial step, a solution of SnCl₂^{∗}5H₂O (0.4 mol/L solution) and a PEG-PPG-PEG copolymer ("Pluronic P-123") (50g/L) in DMF is ink-jet printed. Printing was done on a Dimatix DMP-3000 employing a printhead (Dimatix Materials Cartridge) with a typical drop size of 10pl. Typically, 10 drops are deposited for each layer. Variations of the concentrations of the ink components, i.e. ratio precursor/polymer, may be undertaken in order to tune the morphology of the film. In a solvent vapour annealing step, the print is subjected to 40 °C at a relative humidity (RH) of 95% for 15h, then 40°C/RH=0 for 1h; 80°C /RH=0% for 1h, then 120°C/RH=0% for 1h; before raising the temperature to max 240 °C. In a sintering step, the mixture was heated up to 480°C at 1.5°C /min; held at this temperature for 60 min; and cooled down passively.

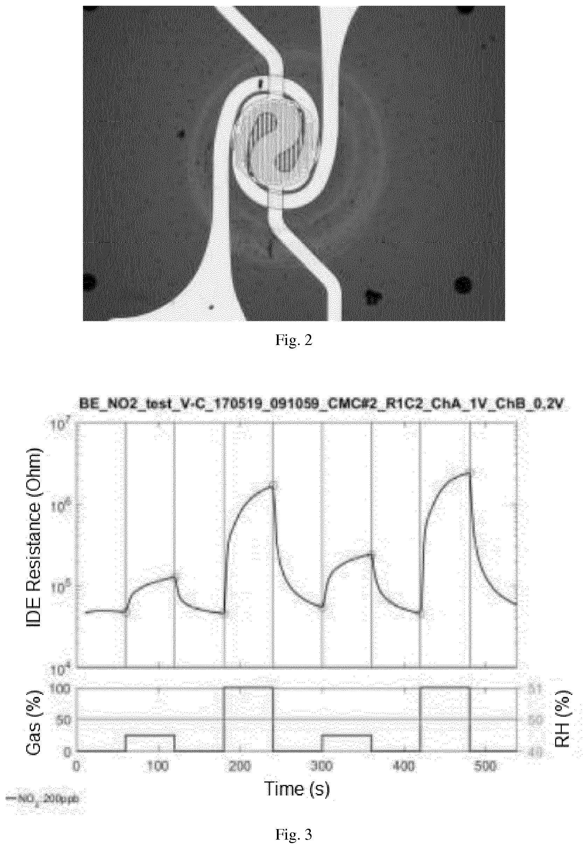

Fig. 2 shows the obtained film on an IDE structure. No cracks are visible in the center of the film in between the IDE fingers; the adhesion of the film is good, i.e. no delamination occurs; the layer thickness obtained by using a profilometer is around 250 nm.

Figure 3 shows the resistance of the above mentioned device upon purging 50 and 200 ppb NO₂ with air as carrier gas; the bias applied to the IDE is 1.0V and to the microheater is 0.2V; relative responses are about 250% and 4300% to 50 and 200 ppb, respectively. The resistance measurements consist of purging cycles of 60s duration. This means that in the beginning synthetic air was purged for 60s, then 400ppm CO₂ in synthetic air was purged for 60s, then synthetic air again, then 4000ppm CO₂, and so forth.

### Example 3 - Indium compound by templated sol-gel process

Example 3 shows the preparation of a VOC (volatile organic compounds)/NO₂ sensor. In an initial step, a solution of In(NO₃)₃^{∗}xH₂O and a PEG-PPG-PEG copolymer ("Pluronic P-123") (50g/L) in DMF is ink-jet printed. Printing was done on a Dimatix DMP-3000 employing a printhead (Dimatix Materials Cartridge) with a typical drop size of 10pl. Typically, 10 drops are deposited for each layer. Variations of the concentrations of the ink components, i.e. ratio precursor/polymer, may be undertaken in order to tune the morphology of the film. In a solvent vapour annealing step, the print is subjected to 40 °C at a relative humidity (RH) of 95% for 15h, then 40°C/RH=0 for 1h; 80°C /RH=0% for 1h, then 120°C/RH=0% for 1h; before raising the temperature to max 240 °C. In a sintering step, the mixture was heated up to 480°C at 1.5°C /min; held at this temperature for 60 min; and cooled down passively. The same concentrations with respect of In(NO₃)₃^{∗}xH₂O and Pluronic P-123 in DMF were used as in Example 2.

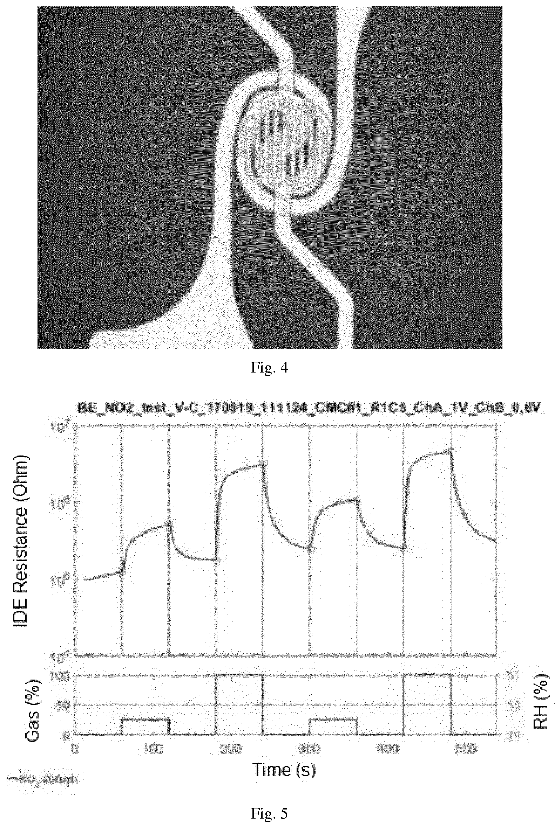

Fig. 4 shows the obtained film on an IDE structure. No cracks are visible in the center of the film in between the IDE fingers; the adhesion of the film is good, i.e. no delamination occurs; the layer thickness obtained by using a profilometer is around 250 nm.

Fig. 5 shows the resistance of the abovementioned device upon purging 50 and 200 ppb NO₂ with air as carrier gas; the bias applied to the IDE is 1.0V and to the microheater is 0.6V; relative responses are about 300% and 1600% to 50 and 200 ppb, respectively.

### Example 4 - La-compound by templated sol-gel process

The preparation of a CO₂ sensor using a La-compound as the metal oxide component via sol-gel route by deposition of a solution of the metal salts was conducted successfully. The exact stoichiometry of the La-compound is highly dependent on the present atmospheric conditions, i.e. temperature, humidity and CO₂ level in air. As suggested in literature, La₂O₃ and La₂O₂CO₃ are present in the film at the same time in a ratio which could be determined by physicochemical analysis such as EDX. The template in this example was Pluronic P-123 and the metal salt component was La(NO₃)₃^{*}6H₂O. DMF was used as the solvent. The concentrations used were the same as in Examples 2 and 3, i.e. the metal oxide precursor was provided in a concentration of 0.4 mol/l and the polymer was provided in a concentration of 50g/l. Inkjet printing was done on a Dimatix DMP-3000 employing a printhead (Dimatix Materials Cartridge) with a typical drop size of 10pl. Typically, 10 drops are deposited for each layer. Variations of the concentrations of the ink components, i.e. ratio precursor/polymer, may be undertaken in order to tune the morphology of the film.

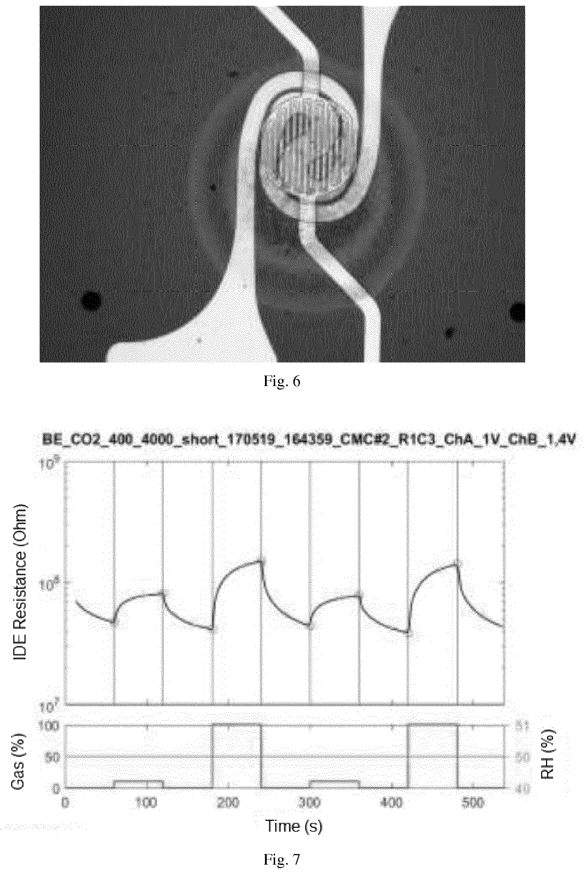

Fig. 6 shows the obtained film on an IDE structure. No cracks are visible in the center of the film in between the IDE fingers; the adhesion of the film is good, i.e. no delamination occurs; the layer thickness obtained by using a profilometer is around 250 nm.

Fig. 7 shows the resistance of the abovementioned device upon purging 400 and 4000 ppm CO₂ with air as carrier gas; the bias applied to the IDE is 1.0V and to the microheater is 1.4V; relative responses are about 75% and 265% to 400 and 4000 ppm, respectively.

### Example 5 - Sensitization of templated SnO₂ by impregnation with La-compound

In this example, the previously synthesized MOX films are impregnated. In general, any of the above synthesized MOX films may be used for impregnation. As impregnation material, In one example, the templated material from Example 2 was functionalized with a second MOX phase in order to obtain sensitivity towards CO₂. This involved impregnation of the network of SnO₂ with an aqueous solution of La(OAc)₃, whereby the concentration was adjusted to about 1/10^{th} of the concentration for the base MOX (in this example, about 40 mmol/L). Variations are possible and desired for performance optimization. Inkjet printing was done on a Dimatix DMP-3000 employing a printhead (Dimatix Materials Cartridge) with a typical drop size of 10pl. Typically, 10 drops are deposited for each layer. The impregnation is followed by sintering by heating up to 510°C at 12.5°C /min; holding the temperature for 80 min at 510°C; followed by letting the device cool down passively.

The SEM picture shows the region between two fingers of the IDE which is coated with SnO₂ and subsequently with some La-containing layer. At closer look, both materials can be distinguished due to the different grey tones. The SnO₂ phase looks brighter which is in accordance with its higher conductivity, and thus less charging nature.

An EDX analysis of SnO₂@La-compound (Table 1, below) reveals the simultaneous presence of SnO₂ and La-containing phases on the IDE structure. However the exact La-phase is currently unknown. The silicon content arises due to the substrate and platinum due to the Pt-electrodes; carbon can be present as impurities due to the decomposition of the soft template and due to the carbon in La₂O₂CO₃.

**Table 1: EDX analysis SnO₂@La-compound according to Example 5, atomic % = at%**

| U_acc(kV) | O (at%) | Sn (at%) | La (at%) | C (at%) | Si (at%) | Pt (at%) |
|---|---|---|---|---|---|---|
| 5 | 51.22 | 0 | 0 | 44.95 | 3.83 | 0 |
| 10 | 45.82 | 11.7 | 26.72 | 45.82 | 0 | 0 |
| 15 | 39.55 | 0.81 | 7 | 35.1 | 15.04 | 2.5 |

As it is expected from the amounts of nanoparticles/precursor used, a much higher amount of La-phase compared to SnO₂ is present on the IDE.

## Claims

1. A deposition method (100) for porous metal oxides in inkjet printing, the method comprising dissolving a metal component and a templating agent in a non-aqueous solvent to form a precursor solution (105), ink-jet printing this precursor solution (110), increasing the relative humidity until at least parts of the non-aqueous solvent are evaporated and replaced with water (115), thereby triggering an evaporation-induced self-assembly (EISA) of the templating agent in combination with inducing condensation of the metal component (120), followed by increasing the temperature to at least 200 °C in order to remove the templating agent (125) and to obtain the porous metal oxide after cooling to room temperature (130).

2. The deposition method of claim 1, wherein the metal component is a metal salt.

3. The deposition method of any one of the preceding claims, wherein the metal of the metal component is a transition metal or a metalloid.

4. The deposition method of any one of the preceding claims, wherein the templating agent is a soft templating agent selected from a macromolecule, a surfactant and a combination thereof.

5. The deposition method of any one of the preceding claims, wherein the relative humidity is increased by at least 50% in order to replace at least parts of the non-aqueous solvent with water and to trigger the EISA of the templating agent in combination with inducing condensation of the metal component.

6. The deposition method of any one of the preceding claims, wherein the non-aqueous solvent is a polar aprotic solvent.

7. The deposition method of any one of the preceding claims, wherein the temperature is increased to about 300 °C to about 600 °C in order to remove the templating agent.

8. The deposition method of any one of the preceding claims, wherein the method further comprises a functionalization of the porous metal oxide by impregnating the obtained porous metal oxide with a solution comprising a metal component and increasing the temperature to at least 300 °C (135).

9. A precursor solution for ink-jet printing comprising a metal component and a templating agent in a non-aqueous solvent, wherein the precursor solution is exposed to ink-jet printing followed by a combination of evaporation-induced self-assembly (EISA) of the templating agent in combination with condensation of the metal component.

10. A gas sensor obtained by depositing the precursor solution of claim 9 on an inter-digitated electrode (IDE) according to the method of any one of claims 1 to 8.
